(19) Europäisches Patentamt
European Patent Office
Office européen des brevets

(11) EP 0 945 472 B1

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(21) Anmeldenummer: **99105638.3**

(22) Anmeldetag: **19.03.1999**

(51) Int Cl.:
*C08F 210/16* (2006.01) *C08F 210/06* (2006.01)
*C08F 4/658* (2006.01) *C08F 4/02* (2006.01)
*C08F 2/34* (2006.01) *C08J 5/18* (2006.01)

(54) **Verfahren zur Herstellung von biaxial gereckten Folien aus statistischen Propylencopolymerisaten**

Process for the Preparation of Biaxially Stretched Films from Statistic Propylene Copolymers

Procédé de préparation de films biaxialement étirées à partir de copolymères statistiques de propylène

(84) Benannte Vertragsstaaten:
**AT BE DE ES FI FR GB IT NL SE**

(30) Priorität: **26.03.1998 DE 19813399**

(43) Veröffentlichungstag der Anmeldung:
**29.09.1999 Patentblatt 1999/39**

(73) Patentinhaber: **Basell Poliolefine Italia S.r.l.**
**20124 Milano (IT)**

(72) Erfinder:
- **Appleyard, David**
  **Middlesbrough,**
  **Cleveland (GB)**
- **Langhauser, Franz, Dr.**
  **67152 Ruppertsberg (DE)**
- **Horton, Murray**
  **Saltburn-by-the-sea**
  **Cleveland (GB)**
- **Hingmann, Roland, Dr.**
  **68526 Ladenburg (DE)**
- **Schweier, Günther, Dr.**
  **67159 Friedelsheim (DE)**
- **Rauschenberger, Volker, Dr.**
  **67304 Eisenberg (DE)**
- **Hennig, Ingolf, Dr.**
  **68809 Neulussheim (DE)**
- **Lilge, Dieter, Dr.**
  **67117 Limburgerhof (DE)**
- **Schöne, Werner, Dr.**
  **69198 Schriesheim (DE)**
- **Kersting, Meinolf, Dr.**
  **67435 Neustadt (DE)**

(74) Vertreter: **Colucci, Giuseppe et al**
**Basell Poliolefine Italia S.r.l.**
**Intellectual Property**
**P.le Privato G. Donegani, 12**
**Casella Postale 19**
**44100 Ferrara (IT)**

(56) Entgegenhaltungen:
**EP-A- 0 115 940**
**EP-A- 0 339 804**
**EP-A- 0 723 978**
**EP-A- 0 778 295**
**EP-A- 0 808 870**
**DE-A- 19 533 337**
**DE-A- 19 749 765**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 945 472 B1

## Beschreibung

Die vorliegende Erfindung betrifft ein Verfahren zur Herstellung von biaxial gereckten Folien aus statistischen Copolymerisaten des Propylens mit anderen Alk-1-enen mit bis zu 10 C-Atomen,

deren Gehalt an Comonomeren im Bereich von 0,7 bis 1,4 Gew. -% liegt, falls in den Propylencopolymerisaten als Comonomer nur Ethylen enthalten ist, oder

deren Gehalt an Comonomeren im Bereich von 0,7 bis 3,0 Gew.-% liegt, falls als Comonomer mindestens ein $C_4$-$C_{10}$-Alk-1-en enthalten ist, und

deren in kaltem Xylol löslicher Anteil von 1,0 bis 2,5 Gew.-% beträgt, falls in den Propylencopolymerisaten als Comonomer Ethylen enthalten ist, oder

deren in kaltem Xylol löslicher Anteil von 0,75 bis 2,0 Gew.-% beträgt, falls als Comonomere nur $C_4$-$C_{10}$-Alk-1-ene enthalten sind.

Propylenhomopolymerisate oder Copolymerisate aus Propylen und anderen Alk-1-enen haben eine breite Verwendung bei der Herstellung von Folien, Fasern oder Formkörpern aus thermoplastischen Formmassen gefunden. Häufig werden hierbei sowohl die Propylenhomopolymerisate als auch die Propylencopolymerisate zusammenfassend als Polypropylen bezeichnet. Zur Herstellung von Folien und insbesondere von biaxial gereckten Folien kommen besonders Homopolymerisate oder statistische Copolymerisate des Propylens zum Einsatz. Die aus diesen Materialien hergestellten biaxial gereckten Folien werden oft auch als BOPP-("Biaxial Orientiertes Polypropylen-")Folien bezeichnet.

Für die Herstellung von biaxial gereckten Polypropylen-Folien ist es nicht nur erwünscht, daß die erhaltenen Folien gute mechanische und anwendungstechnische Eigenschaften wie Steifigkeit, Zähigkeit, Transparenz oder Glanz aufweisen, sondern es ist vor allem eine gute Verarbeitbarkeit der Propylenpolymerisate erforderlich. Eine gute Verarbeitbarkeit ergibt einerseits einen störungsfrei ablaufenden Produktionsprozeß. Dies wird angestrebt, da jede Unterbrechung der kontinuierlichen Produktion (z.B. ein "Filmriß") ein zeitaufwendiges Wiederanfahren der Produktion notwendig macht. Und andererseits erhält man eine bessere Qualität der Folien, beispielsweise eine gleichmäßigere Dickenverteilung. Ein gute Verarbeitbarkeit bedeutet auch, daß der Produktionsprozeß nicht zu empfindlich auf Temperaturschwankungen reagiert, d.h. daß ein großes Verarbeitungsfenster zur Verfügung steht.

Da zur Herstellung biaxial gereckter Folien herkömmliche Propylenhomopolymerisate nicht eingesetzt werden können, weil deren Verarbeitbarkeit nicht ausreichend ist, werden häufig Propylenhomopolymerisate mit angehobenen löslichen Anteilen verwendet. Aus diesen Materialien hergestellte Folien zeigen jedoch Nachteile in der Steifigkeit und auch die Verarbeitbarkeit ist noch verbesserungswürdig.

Herkömmliche statistische Propylencopolymerisate, wie sie beispielsweise in der EP-A 778 295 beschrieben werden, eignen sich nicht zur Herstellung von BOPP-Folien, weil deren Steifigkeit bei weitem zu niedrig wäre. Außerdem ist wegen der hohen löslichen Anteile die Anwendung der Folien im Bereich Lebensmittelverpakkungen nicht möglich.

In der EP-A 339 804 werden Reaktorblends aus einem Propylenhomopolymerisat und einem statistischen Propylencopolymerisat beschrieben, die vor allem zur Herstellung von orientierten Folien geeignet sind. Solche Reaktorblends sind allerdings nur über eine Reaktorkaskade zugänglich und somit wirtschaftlich unattraktiv.

In der US-A 4 355 144 wird vorgeschlagen, zur Verbesserung der Dehnbarkeit ein statistisches Propylen-Ethylen-Copolymerisat mit 0,1 bis 1,0 Gew.-% Ethylen zu verwenden, das mit einem Titantrichlorid enthaltenden Katalysator polymerisiert wird. Allerdings wird so selbst bei sehr kleinen Ethylenmengen die Isotaktizität des Copolymerisats drastisch herabgesetzt und man erhält gereckte Produkte mit niedriger Steifigkeit und hohen extrahierbaren Anteilen.

Die EP-A 115 940 offenbart zur Herstellung von biaxial gedehnten Folien geeignete Propylen-Ethylen-Copolymerisate mit 0,1 bis 2,0 mol-% Ethylen und einer hohen Isotaktizität, wobei die Isotaktizität als Triadentaktizität im $^{13}C$-NMR-Spektrum bestimmt wird. Diese Copolymerisate haben eine gute Dehnbarkeit, Steifigkeit, Transparenz, Schlagzähigkeit und Wärmeschrumpfbeständigkeit. Allerdings genügen sie in ihren mechanischen, optischen und rheologischen Eigenschaften häufig noch nicht den Ansprüchen der Hersteller von BOPP-Folien. Insbesondere weisen sie häufig nicht gleichzeitig eine optimale Verarbeitbarkeit und sehr gute mechanische Eigenschaften auf.

Der vorliegenden Erfindung lag daher die Aufgabe zugrunde, Polypropylene zu entwickeln, die eine weiter verbesserte Verarbeitbarkeit aufweisen und aus denen sich biaxial gereckte Folien herstellen lassen, die eine hohe Steifigkeit, Zähigkeit und Transparenz besitzen.

Demgemäß wurde das eingangs definierte Verfahren zur Herstellung von biaxial gereckten Folien aus statistischen Copolymerisaten des Propylens mit anderen Alk-1-enen mit bis zu 10 C-Atomen gefunden.

Unter der Bezeichnung andere Alk-1-enen mit bis zu 10 C-Atomen sollen lineare oder verzweigte Alk-1-ene mit Ausnahme des Propylens verstanden werden, die von zwei bis zehn Kohlenstoffatome aufweisen. Bevorzugt sind lineare Alk-1-ene. Insbesondere sind Ethylen, But-1-en, Pent-1-en, Hex-1-en, Hept-1-en oder Oct-1-en oder Gemische aus diesen Comonomeren zu nennen, wobei bevorzugt Ethylen oder But-1-en verwendet wird. Bei den besonders bevorzugten Copolymerisaten kann es sich um Propylen-Ethylen- oder um Propylen-But-1-en-Copolymerisate oder um Propylen-Ethylen-But-1-en-Terpolymerisate handeln.

Die statistischen Propylencopolymerisate weisen einen Ethylen-Gehalt von 0,7 bis 1,4 Gew.-%, bevorzugt von

0,75 bis 1,2 Gew.-% auf, falls es sich bei den Propylencopolymerisaten um Propylen-Ethylen-Copolymerisate ohne weitere Comonomere handelt. Falls die Propylencopolymerisate als Comonomere $C_4$-$C_{10}$-Alk-1-ene enthalten, d.h. falls es Copolymerisate aus Propylen und mindestens einem $C_4$-$C_{10}$-Alk-1-en oder Copolymerisate aus Propylen, Ethylen und mindestens einem $C_4$-$C_{10}$-Alk-1-en sind, liegt der Gehalt an Comonomer im Bereich von 0,7 bis 3,0 Gew.-% und bevorzugt von 0,75 bis 1,9 Gew.-%. Die erfindungsgemäßen Gehalte an $C_4$-$C_{10}$-Alk-1-enen, ausgedrückt in Gew.-%, liegen etwas höher als die an Ethylen, da die Beeinflussung der Polymereigenschaften durch den Comonomereinbau über das molekulare Verhältnis der Monomere erfolgt.

Des weiteren zeichnen sich die Propylencopolymerisate durch einen in kaltem Xylol löslichen Anteil von 1,0 bis 2,5 Gew.%, insbesondere von 1,5 bis 2,0 Gew.-%, aus, falls in den Propylencopolymerisaten Ethylen enthalten ist, d.h. es sich um Propylen-Ethylen-Copolymerisate oder Copolymerisate aus Propylen, Ethylen und mindestens einem $C_4$-$C_{10}$-Alk-1-en handelt. Handelt es sich bei den Propylencopolymerisaten um Copolymerisate aus Propylen und mindestens einem $C_4$-$C_{10}$-Alk-1-en, jedoch ohne Ethylen, liegt der in kaltem Xylol löslichen Anteil im Bereich von 0,75 bis 2,0 Gew.-% und bevorzugt von 0,8 bis 1,4 Gew.-%.

Die xylollöslichen Anteile der erfindungsgemäßen Copolymerisate liegen etwas höher, wenn Ethylen als Comonomer eingesetzt wird, weil Ethylen vorwiegend im niedermolekularen Bereich eingebaut wird.

Unter den in kaltem Xylol löslichen Anteilen sind die nach einem Verfahren analog der ISO-Norm 1873-1:1991 bestimmten Anteile zu verstehen. Hierzu werden 5 g Polypropylen in 500 ml destilliertes

Xylol, das zuvor auf 100°C erhitzt wurde, gegeben. Anschließend erhitzt man die Mischung auf den Siedepunkt des Xylols und hält 60 min bei dieser Temperatur. Daraufhin wird innerhalb von 20 min mit einem Kältebad auf 5°C abgekühlt und dann wieder auf 20°C erwärmt. Diese Temperatur wird für 30 min gehalten. Das ausgefallene Polymerisat filtriert man ab. Von dem Filtrat werden exakt 100 ml abgefüllt und das Lösungsmittel am Rotationsverdampfer entfernt. Der verbleibende Rückstand wird für ca. 2 h bei 80°C/250 mbar bis zur Gewichtskonstanz getrocknet und nach dem Erkalten ausgewogen.

Der xylollösliche Anteil ergibt sich aus

$$X_L = \frac{g \times 500 \times 100}{G \times V}$$

mit

$X_L$ = xylollöslicher Anteil in %,
g = gefundene Menge in g,
G = Produkteinwaage in g,
V = Volumen der eingesetzten Filtratmenge in ml.

Überraschenderweise ist gerade dann die Verarbeitbarkeit zu biaxial gereckten Folien besonders gut, wenn der xylollösliche Anteil im oben angegebenen Bereich liegt.

Es wurde nun gefunden, daß die statistischen Copolymerisate des Propylens mit anderen Alk-1-enen mit bis zu 10 C-Atomen besonders dann zur Herstellung von biaxial gereckten Folien geeignet sind, d.h. eine gute Verarbeitbarkeit zeigen, wenn sich die Viskosität ihrer Schmelze in der Nähe der Schmelztemperatur nur wenig ändert. Unter der Schmelztemperatur wird in diesem Zusammenhang die niedrigste Temperatur verstanden, bei der das Polymerisat vollständig aufgeschmolzen ist, und unter Schmelze das Polymerisat im vollständig oder teilweise aufgeschmolzenen Zustand. Eine geringe Abhängigkeit der Fließeigenschaften der Schmelze von der Temperatur ist insbesondere vorteilhaft, da sich die Temperatur der Polymerisatschmelze im Laufe der Folienherstellung mehrfach ändert, wobei Temperaturgradienten auftreten können, die sehr hoch sind.

Eine Erfassung der Änderung der Viskosität mit der Temperatur gelingt beispielsweise dadurch, daß man die Werte $Q_5$ oder $Q_3$ bestimmt, wobei der $Q_5$-Wert sich aus

$$Q_5 = 1000 \times \frac{\mu(T_m)}{\mu(T_m - 5K)}$$

und der $Q_3$-Wert sich aus

$$Q_3 = 1000 \times \frac{\mu(T_m)}{\mu(T_m-3K)}$$

ergibt, $\mu(T_m)$ die Dehnviskosität des statistischen Copolymerisats des Propylens bei der niedrigsten Temperatur, bei der das Copolymerisat vollständig aufgeschmolzen ist, $\mu(T_m\text{-}5K)$ die Dehnviskosität bei der um 5K niedrigeren Temperatur und $\mu(T_m\text{-}3K)$ die Dehnviskosität bei der um 3K niedrigeren Temperatur bedeuten und bei allen Temperaturen T die Dehnviskositäten $\mu(T)$ 2 Sekunden nach Dehnbeginn bei einer konstanten Dehngeschwindigkeit (Hencky-Dehnrate) $\dot{\varepsilon}$ von 0,2 $s^{-1}$ bestimmt werden.

Die Messung der Dehnviskositäten erfolgt in der Regel mittels eines Dehnrheometers. Solche Geräte sind beispielsweise von der Fa. Rheometric Scientific kommerziell erhältlich. Bei diesen wird eine rechteckige Probe durch zwei Paare von Klemmen mit konstanter Hencky-Dehnrate $\dot{\varepsilon}$ ($\dot{\varepsilon} = 1^{-1}$ dl/dt) gestreckt, wobei die Probe auf einem Strom heißen Stickstoffs schwebt. Um Orientierungen in der Probe zu vermeiden, wird das zu untersuchende Polymerisat zunächst durch eine Düse extrudiert, dann zu einem flachen Streifen von 2 mm Dicke gepreßt und langsam auf Raumtemperatur abgekühlt. Aus dem Streifen wird eine rechteckige Probe von 2 x 8 x 56 $mm^3$ geschnitten, die Probe in das vorgewärmte Dehnrheometer eingelegt, nach dem Einbau zehn Minuten bei dieser Temperatur gehalten und dann gestreckt. Da mit einer konstanten Hencky-Dehnrate $\dot{\varepsilon}$ gearbeitet wird, ist die Dehnung $\varepsilon$ direkt proportional zu der Zeit. Als gut geeignet hat sich eine Hencky-Dehnrate $\dot{\varepsilon}$ von 0,2 $s^{-1}$ herausgestellt.

Erfolgt die Messung bei einer Temperatur, bei der die Probe vollständig aufgeschmolzen ist, steigt die Viskosität im Verlauf der Messung (d.h. mit zunehmender Dehnung) an, um dann auf ein Plateau abzuflachen. Beispielhaft kann man ein solches Verhalten in der 166°C-Kurve der nachstehenden Figur 1 erkennen. Die Dehnviskosität verläuft entsprechend dem Dreifachen der Scherviskosität (Trouton-Viskosität). Bei Temperaturen, bei denen die Probe nur teilweise aufgeschmolzen ist, ist eine kristallisationsinduzierte Dehnverfestigung zu beobachten (151°C-Kurve in Figur 1). Die Kurvensteigung wird mit zunehmender Dehnung $\varepsilon$ größer und die Dehnviskosität steigt über die Trouton-Viskosität.

Da die Viskositäten auch von der Dehnung der Probe (d.h. vom Zeitpunkt des Dehnexperiments) abhängen, ist es notwendig, die Dehnviskositäten $\mu(T)$ unterschiedlicher Temperaturen bei gleicher Dehnung $\varepsilon$ (d.h. zum gleichen Zeitpunkt t des Dehnexperiments) miteinander zu vergleichen. Hierbei hat sich für die Hencky-Dehnrate $\dot{\varepsilon} = 0{,}2\ s^{-1}$ der Zeitpunkt t = 2 s (d.h. $\varepsilon = 0{,}4$) als geeignet herausgestellt. Die Dehnviskositäten $\mu(T)$ werden also vorzugsweise 2 Sekunden nach Dehnbeginn bei einer konstanten Hencky-Dehnrate $\dot{\varepsilon}$ von 0,2 $s^{-1}$ bestimmt.

Die Schmelztemperatur $T_m$, bei der das Copolymerisat gerade vollständig aufgeschmolzen ist, kann aus einem Diagramm der logarithmisch aufgetragenen Dehnviskosität $\mu(T)$ 2 Sekunden nach Dehnbeginn bei einer konstanten Hencky-Dehnrate $\dot{\varepsilon}$ von 0,2 $s^{-1}$ gegen die Temperatur T entnommen werden. Hierbei ist Schmelztemperatur $T_m$ die Temperatur, bei der die Dehnviskosität um weniger als 7,5 % höher liegt als bei T + 1K und um 7,5 % oder mehr tiefer liegt als bei T - 1K. Dies ist beispielhaft in der nachstehenden Figur 2 dargestellt. Die Schmelztemperatur $T_m$ ist in dieser Darstellung die Temperatur, bei der eine Gerade mit der negativen Steigung 7,5% die Kurve der Dehnviskositäten $\mu(T)$ gegen die Temperatur T gerade tangiert.

Die erfindungsgemäßen Propylencopolymerisate zeichnen sich durch eine geringe Abhängigkeit der Fließeigenschaften von der Temperatur aus und lassen sich somit besonders gut zu biaxial gereckten Folien verarbeiten. Dies äußert sich darin, daß in einem Diagramm, in dem analog der nachstehenden Figur 2 $\mu(T)$ gegen die Temperatur T aufgetragen ist, $\mu(T)$ bei Temperatur kleiner als $T_m$ nur langsam ansteigt. Die erfindungsgemäßen Propylencopolymerisate weisen somit hohe Q-Werte auf. (Würde $\mu(T)$ mit abnehmender Temperatur nicht ansteigen, wäre Q gleich 1000.) Der $Q_5$-Wert der erfindungsgemäßen Copolymerisate ist bevorzugt größer oder gleich 200 und insbesondere größer oder gleich 300. Der $Q_3$-Wert ist bevorzugt größer oder gleich 350 und insbesondere größer oder gleich 500.

Die teilkristallinen Polymerisate sind auch dann zur Herstellung von biaxial gereckten Folien besonders gut geeignet, wenn sich bei partiellem Aufschmelzen der Polymerisate eine große Dehnverfestigung zeigt. Als Maß der Dehnverfestigung kann man den Faktor SH ("Strain Hardening") ermitteln. Hierzu wird aus Diagrammen analog der nachstehenden Figur 1 zum einen die maximale Steigung der Dehnviskosität bei Temperaturen kleiner $T_m$-5K und zum anderen die Steigung 1 Sekunde nach Dehnbeginn bei einer konstanten Hencky-Dehnrate $\dot{\varepsilon}$ von 0,2 $s^{-1}$ und einer Temperatur von $T_m$-5K bestimmt. Der Faktor SH ist dann entsprechend der Formel

$$SH = \frac{\max(m(\mu(T \leq T_m-5K)))}{m(\mu(T=T_m-5K,\ t=1s))} ,$$

in der m für die Steigung steht, das Verhältnis dieser beiden Steigungen. Die erfindungsgemäßen Propylencopolymerisate weisen bevorzugt Faktoren SH größer als 1,5 auf.

Besonders vorteilhaft ist es, wenn beide Effekte stark ausgeprägt sind und die Kenngröße PI ("Processability Index"), die sich nach der Formel

$$PI = \ln(SH + 1) \cdot (\ln Q_3 + \ln Q_5)$$

ergibt, einem möglichst großen Wert annimmt. Die Größe PI gibt ein Maß für die Breite des Verarbeitungsfensters wieder und ist gleichzeitig eine Maßzahl für die Gleichmäßigkeit des zu erwartenden Folienprofils. Ein hoher PI steht für ein breites Verarbeitungsfenster und eine gleichmäßige Foliendicke.

Die erfindungsgemäßen Propylencopolymerisate weisen bevorzugt Werte PI größer 18 und insbesondere größer 20 auf.

Die Herstellung der erfindungsgemäßen statistischen Copolymerisate des Propylens mit anderen Alk-1-enen mit bis zu 10 C-Atomen kann in den üblichen, für die Polymerisation von Alk-1-enen verwendeten Reaktoren entweder absatzweise oder bevorzugt kontinuierlich als Gasphasenpolymerisation durchgeführt werden. Geeignete Reaktoren sind beispielsweise kontinuierlich betriebene Rührreaktoren oder Wirbelbettreaktoren. Selbstverständlich kann die Reaktion auch in einer Reihe von mehreren, hintereinander geschalteten Reaktoren durchgeführt werden. Geeignete Gasphasenreaktoren sind hierbei Wirbelbettreaktoren sowie horizontal oder vertikal gerührte Pulverbettreaktoren. Insbesondere werden Pulverbettreaktoren eingesetzt, bei denen das Reaktionsbett durch vertikale Rührer in Bewegung gehalten werden. Das Reaktionsbett besteht im allgemeinen aus dem Polymerisat, das im jeweiligen Reaktor produziert wird.

Die Polymerisation der statistischen Propylencopolymerisate befolgt aus der Gasphase heraus bei Temperaturen im Bereich von 50 bis 100°C, bevorzugt von 60 bis 90°C, und Drücken im Bereich von 15 bis 40 bar, bevorzugt von 20 bis 35 bar, in Gegenwart eines Ziegler-Natta-Katalysatorsystems enthaltend,

a) eine titanhaltige Feststoffkomponente, enthaltend mindestens eine halogenhaltige Magnesiumverbindung und einen Elektronendonor,

b) eine Aluminiumverbindung und

c) eine weitere Elektronendonorverbindung.

In der Regel beträgt die mittlere Verweilzeit von 0,5 bis 5 Stunden, bevorzugt von 0,5 bis 3 Stunden. Das Verhältnis der Partialdrücke von Propylen zu dem der Comonomere wird bevorzugt auf von 400:1 bis 15:1 eingestellt. Handelt es sich bei den statistischen Copolymerisaten um Propylen-Ethylen-Copolymerisate, beträgt das Verhältnis der Partialdrücke von Propylen zu Ethylen besonders bevorzugt von 200:1 bis 30:1 und insbesondere von 150:1 bis 50:1. Enthalten die statistischen Propylen-Copolymerisate als Comonomere mindestens ein $C_4$-$C_{10}$-Alk-1-en, beträgt das Verhältnis der Partialdrücke von Propylen zu dem der Comonomere besonders bevorzugt von 350:1 bis 30:1 und insbesondere von 250:1 bis 40:1.

Zur Herstellung der titanhaltigen Feststoffkomponente a) werden als Titanverbindungen im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Beispiele für geeignete Titanverbindungen sind $TiBr_3$, $TiBr_4$, $TiCl_3$, $TiCl_4$, $Ti(OCH_3)Cl_3$, $Ti(OC_2H_5)Cl_3$, Ti(O-iso-$C_3H_7$)$Cl_3$, Ti(O-n-$C_4H_9$)$Cl_3$, $Ti(OC_2H_5)Br_3$, Ti(O-n-$C_4H_9$)$Br_3$, $Ti(OCH_3)_2Cl_2$, $Ti(OC_2H_5)_2Cl_2$, Ti(O-n-$C_4H_9$)$_2Cl_2$, $Ti(OC_2H_5)_2Br_2$, $Ti(OCH_3)_3Cl$, $Ti(OC_2H_5)_3Cl$, Ti(O-n-$C_4H_9$)$_3$Cl $Ti(OC_2H_5)_3Br$, $Ti(OCH_3)_4$, $Ti(OC_2H_5)_4$ oder Ti(O-n-$C_4H_9$)$_4$. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid.

Die titanhaltige Feststoffkomponente a) enthält mindestens eine oder eine Mischung verschiedener halogenhaltiger Magnesiumverbindungen. Als Halogene werden hierbei Chlor, Brom, Jod oder Fluor oder Mischungen aus zwei oder mehr Halogenen verstanden, wobei Chlor oder Brom und insbesondere Chlor bevorzugt sind.

Die halogenhaltigen Magnesiumverbindungen werden entweder bei der Herstellung der titanhaltige Feststoffkomponente a) direkt eingesetzt oder bei deren Herstellung gebildet. Als Magnesiumverbindungen, die sich zur Herstellung der titanhaltige Feststoffkomponente a) eignen, kommen vor allem die Magnesiumhalogenide, wie insbesondere die Chloride oder Bromide, oder Magnesiumverbindungen, aus denen die Halogenide in üblicher Weise z.B. durch Umsetzung mit Halogenierungsmitteln erhalten werden können wie Magnesiumalkyle, Magnesiumaryle, Magnesiumalkoxy- oder Magnesiumaryloxyverbindungen oder Grignardverbindungen in Betracht. Geeignete Halogenierungsmitteln

sind beispielsweise Halogene, Halogenwasserstoffe, $SiCl_4$ oder $CCl_4$ und bevorzugt Chlor oder Chlorwasserstoff.

Beispiele für halogenfreie Verbindungen des Magnesiums, die zur Herstellung der titanhaltige Feststoffkomponente a) geeignet sind, sind Diethylmagnesium, Di-n-propylmagnesium, Di-iso-propylmagnesium, Di-n-butylmagnesium, Di-sek.-butylmagnesium, Di-tert.-butylmagnesium, Diamylmagnesium, n-Butylethylmagnesium, n-Butylsek.-butylmagnesium, n-Butyloctylmagnesium, Diphenylmagnesium, Diethoxymagnesium, Di-n-propyloxymagnesium, Di-iso-propyloxymagnesium, Di-n-butyloxymagnesium, Di-sek.-butyloxymagnesium, Di-tert.-butyloxymagnesium, Diamyloxymagnesium, n-Butyloxyethoxymagnesium, n-Butyloxy-sek.-butyloxymagnesium, n-Butyloxyoctyloxymagnesium oder Diphenoxymagnesium. Von diesen sind n-Butylethylmagnesium oder n-Butyloctylmagnesium besonders bevorzugt.

Als Beispiele für Grignardverbindungen sind Methylmagnesiumchlorid, Ethylmagnesiumchlorid, Ethylmagnesiumbromid, Ethylmagnesiumjodid, n-Propylmagnesiumchlorid, n-Propylmagnesiumbromid, n-Butylmagnesiumchlorid, n-Butylmagnesiumbromid, sek.-Butylmagnesiumchlorid, sek.-Butylmagnesiumbromid, tert.-Butylmagnesiumchlorid, tert.-Butylmagnesiumbromid, Hexylmagnesiumchlorid, Octylmagnesiumchlorid, Amylmagnesiumchlorid, Isoamylmagnesiumchlorid, Phenylmagnesiumchlorid und Phenylmagnesiumbromid zu nennen.

Bevorzugt werden außer Magnesiumdichlorid oder Magnesiumdibromid vor allem die Magnesiumdi-($C_1$-$C_{10}$-alkyl)-Verbindungen zur Herstellung der titanhaltigen Feststoffkomponente a) eingesetzt.

Darüber hinaus enthält die titanhaltige Feststoffkomponente a) Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II)

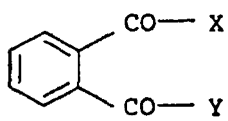

(II)

verwendet, wobei X und Y jeweils für ein Chlor- oder Bromatom oder einen $C_1$-$C_{10}$-Alkoxyrest oder gemeinsam für Sauerstoff in Anhydridfunktion stehen. Besonders bevorzugte Elektronendonorverbindungen sind Phthalsäureester, wobei X und Y einen $C_1$-$C_8$-Alkoxyrest, beispielsweise einen Methoxy-, Ethoxy-, n-Propyloxy-, iso-Propyloxy- n-Butyloxy-, sek.-Butyloxy-, iso-Butyloxy- oder einen tert.-Butyloxyrest, bedeuten. Beispiele für vorzugsweise eingesetzte Phthalsäureester sind Diethylphthalat, Di-n-butylphthalat, Di-iso-butylphthalat, Di-n-pentylphthalat, Di-n-hexylphthalat, Di-n-heptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise $C_1$-$C_{15}$-A1-kanole oder $C_5$-$C_7$-Cycloalkanole, die ihrerseits eine oder mehrere $C_1$-$C_{10}$-Alkylgruppen tragen können, ferner $C_6$-$C_{10}$-Phenole.

Es können auch Mischungen verschiedener Elektronendonorverbindungen verwendet werden.

Bei der Herstellung der titanhaltigen Feststoffkomponente a) werden in der Regel pro Mol der Magnesiumverbindung von 0,05 bis 2,0 mol, bevorzugt von 0,2 bis 1,0 mol, der Elektronendonorverbindungen eingesetzt.

Darüber hinaus enthält die titanhaltige Feststoffkomponente a) in einer besonders bevorzugten Ausführungsform mindestens ein anorganisches Oxid als Träger. Es wird in der Regel ein feinteiliges anorganisches Oxid als Träger verwendet, welches einen mittleren Teilchendurchmesser von 5 bis 200 μm, bevorzugt von 20 bis 70 μm, aufweist. Unter dem mittleren Teilchendurchmesser ist hierbei der volumenbezogene Mittelwert (Medianwert) der durch Coulter-Counter-Analyse nach ASTM Standard D 4438 bestimmten Korngrößenverteilung zu verstehen.

Vorzugsweise sind die Körner des feinteilige anorganischen Oxids aus Primärpartikeln zusammengesetzt, die einen mittleren Teilchendurchmesser der Primärpartikel von 1 bis 20 μm, insbesondere von 3 bis 10 μm aufweisen. Bei den sogenannten Primärpartikeln handelt es sich um poröse, granuläre Oxidpartikel, welche im allgemeinen durch Mahlung aus einem Hydrogel des anorganischen Oxids erhalten werden. Es ist auch möglich die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 μm, insbesondere von 1 bis 15 μm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel, der mittleren Durchmesser der Hohlräume bzw. Kanäle sowie des makroskopischen Volumenanteils der Hohlräume und Kanäle des anorganischen Oxids

erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhaltenen elektronenmikroskopischen Aufnahmen werden ausgewertet und daraus die mittleren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 $cm^3$/g, bevorzugt von 1,0 bis 4,0 $cm^3$/g, und eine spezifische Oberfläche von 10 bis 1000 $m^2$/g, bevorzugt von 100 bis 500 $m^2$/g, auf, wobei hier die durch Quecksilber-Porosimetrie nach DIN 66133 und durch Stickstoff-Adsorption nach DIN 66131 bestimmten Werte zu verstehen sind.

Als anorganische Oxide kommen vor allem die Oxide des Siliciums, des Aluminiums, des Titans oder eines der Metalle der I. bzw. der II. Hauptgruppe des Periodensystems in Betracht. Bevorzugte Oxide sind beispielsweise Aluminiumoxid, Magnesiumoxid oder Schichtsilikate. Besonders bevorzugt wird Siliciumoxid (Kieselgel) verwendet. Es können auch Mischoxide wie Aluminiumsilikate oder Magnesiumsilikate eingesetzt werden.

Die als Träger eingesetzten anorganischen Oxide enthalten auf ihrer Oberfläche Wasser. Dieses Wasser ist zum Teil physikalisch durch Adsorption und zum Teil chemisch in Form von Hydroxylgruppen gebunden. Durch thermische oder chemische Behandlung kann der Wassergehalt des anorganischen Oxids reduziert oder ganz beseitigt werden, wobei in der Regel bei einer chemischen Behandlung übliche Trocknungsmittel wie $SiCl_4$, Chlorsilane oder Aluminiumalkyle zum Einsatz kommen. Der Wassergehalt geeigneter anorganischer Oxide beträgt von 0 bis 6 Gew.-%. Der Wassergehalt wird üblicherweise dadurch bestimmt, daß man das anorganische Oxid bei 160 ˚C unter Normaldruck bis zur Gewichtskonstanz trocknet. Die Gewichtsabnahme entspricht dem ursprünglichen Wassergehalt. Vorzugsweise wird ein anorganische Oxid in der Form, wie es im Handel erhältlich ist, ohne weitere Behandlung eingesetzt.

Falls ein anorganisches Oxid zu Einsatz kommt, liegen das anorganische Oxid und die Magnesiumverbindung innerhalb der titanhaltigen Feststoffkomponente a) bevorzugt in solchen Mengen vor, daß pro Mol des anorganischen Oxids von 0,1 bis 1,0 mol, insbesondere von 0,2 bis 0,5 mol der Verbindung des Magnesiums vorhanden sind.

Bei der Herstellung der titanhaltigen Feststoffkomponente a) kommen in der Regel ferner $C_1$-$C_8$-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 48 57 613 und der US-A 52 88 824 beschrieben.

Bei der Herstellung der titanhaltigen Feststoffkomponente a) wird bevorzugt folgendes zweistufige Verfahren angewandt:

In der ersten Stufe versetzt man zunächst in einem inerten Lösungsmittel, bevorzugt einem flüssigen Alkan oder einem aromatischen Kohlenwasserstoff, z.B. Toluol oder Ethylbenzol, das anorganische Oxid mit einer Lösung der magnesiumhaltigen Verbindung, wonach man dieses Gemisch von 0,5 bis 5 Stunden bei einer Temperatur von 10 bis 120˚C in der Regel unter Rühren reagieren läßt. Anschließend fügt man, üblicherweise unter ständigem Rühren, ein Halogenierungsmittel im wenigstens zweifachen, bevorzugt im wenigstens fünffachen molaren Überschuß, bezogen auf die magnesiumhaltige Verbindung, hinzu, wobei man etwa 30 bis 120 Minuten reagieren läßt. Danach gibt man bei einer Temperatur von -20 bis 150˚C das $C_1$-$C_8$-Alkanol sowie die Titanverbindung und die Elektronendonorverbindung hinzu. Die Zugabe der Titanverbindung und der Elektronendonorverbindung kann gleichzeitig mit dem $C_1$-$C_8$-Alkanol erfolgen, man kann jedoch auch zunächst das $C_1$-$C_8$-Alkanol von etwa 10 bis 120 Minuten bei einer Temperatur von 0 bis 100˚C auf das Zwischenprodukt einwirken lassen. Man setzt pro Mol Magnesium von 1 bis 5 mol, bevorzugt von 1,6 bis 4 mol des $C_1$-$C_8$-Alkanols, von 1 bis 15 mol, bevorzugt von 2 bis 10 mol der Titanverbindung und von 0,01 bis 1 mol, bevorzugt von 0,3 bis 0,7 mol, der Elektronendonorverbindung ein. Dieses Gemisch läßt man wenigstens 10 Minuten, insbesondere wenigstens 30 Minuten bei einer Temperatur im Bereich von 10 bis 150˚C, bevorzugt von 60 bis 130˚C, im allgemeinen unter Rühren reagieren. Der so erhaltene feste Stoff wird anschließend abfiltriert und mit einem $C_7$-$C_{10}$-Alkylbenzol, bevorzugt mit Ethylbenzol, gewaschen.

In der zweiten Stufe extrahiert man den aus der ersten Stufe erhaltenen Feststoff bei Temperaturen im Bereich von 100 bis 150˚C mit überschüssigem Titantetrachlorid oder einer im Überschuß vorliegenden Lösung von Titantetrachlorid in einem inerten Lösungsmittel, vorzugsweise einem $C_7$-$C_{10}$-Alkylbenzol, wobei das Lösungmittel wenigstens 5 Gew.-% Titantetrachlorid enthält. Die Extraktion wird in der Regel wenigstens 30 Minuten lang durchgeführt. Danach wäscht man das Produkt solange mit einem flüssigen Alkan, bis der Gehalt der Waschflüssigkeit an Titantetrachlorid weniger als 2 Gew.-% beträgt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindungen der allgemeinen Formel (I)

$$R^1_nSi(OR^2)_{4-n} \qquad (I)$$

wobei $R^1$ gleich oder verschieden ist und eine $C_1$-$C_{20}$-Alkylgruppe, eine 5- bis 7-gliedrige Cycloalkylgruppe, die ihrerseits durch $C_1$-$C_{10}$-Alkyl substituiert sein kann, eine $C_6$-$C_{18}$-Arylgruppe oder eine $C_6$-$C_{18}$-Aryl-$C_1$-$C_{10}$-alkylgruppe bedeutet, $R^2$ gleich oder verschieden ist und eine $C_1$-$C_{20}$-Alkylgruppe bezeichnet und n für die ganzen Zahlen 1, 2 oder 3 steht. Besonders bevorzugt werden solche Verbindungen, in denen $R^1$ eine $C_1$-$C_8$-Alkylgruppe oder eine 5- bis 7-gliedrige Cycloalkylgruppe sowie $R^2$ eine $C_1$-$C_4$-Alkylgruppe bedeutet und n für die Zahlen 1 oder 2 steht.

Unter diesen Verbindungen sind insbesondere Diisopropyldimethoxysilan, Isobutylisopropyldimethoxysilan, Diisobutyldimethoxysilan, Dicyclopentyldimethoxysilan, Dicyclohexyldimethoxysilan, Cyclohexylmethyldimethoxysilan, Isopropyl-tert.-butyldimethoxysilan, Isobutyl-sek.-butyldimethoxysilan und Isopropyl-sek.-butyldimethoxysilan hervorzuheben. Ganz besonders bevorzugt ist Dicyclopentyldimethoxysilan.

Die als Cokatalysatoren wirkenden Verbindungen b) und c) kann man sowohl einzeln, nacheinander in beliebiger Reihenfolge als auch gleichzeitig zusammen auf die titanhaltige Feststoffkomponente a) einwirken lassen. Üblicherweise geschieht dies bei Temperaturen von 0 bis 150˚C, insbesondere von 20 bis 90˚C und Drücken von 1 bis 100 bar, insbesondere von 1 bis 40 bar.

Bevorzugt wird der Cokatalysator b) in einer solchen Menge eingesetzt, daß das Atomverhältnis zwischen Aluminium aus der Aluminiumverbindung b) und Titan aus der titanhaltigen Feststoffkomponente a) von 10:1 bis 800: 1, insbesondere von 20:1 bis 200:1 beträgt.

Das Molverhältnis zwischen der Aluminiumverbindung b) und der weiteren Elektronendonorverbindung c) liegt im bevorzugten Verfahren im Bereich von 20:1 bis 2:1 und insbesondere von 15:1 bis 5:1.

Die Molmasse der statistischen Copolymerisate des Propylens kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie Toluol oder Hexan, Inertgas wie Stickstoff oder Argon und kleinere Mengen Polypropylenpulver mitzuverwenden. Die erfindungsgemäßen statistischen Propylencopolymerisate weisen vorzugsweise Molmassen (Gewichtsmittel) von 80 000 bis 600 000 g/mol auf. Ihre Schmelze-Fließraten (MFR), bei 230˚C und unter einem Gewicht von 2,16 kg, nach ISO 1133 liegen im Bereich von 0,1 bis 100 g/10 min, insbesondere im Bereich von 0,5 bis 50 g/10 min.

Üblicherweise enthalten die statistischen Pro. pylencopolymerisate Additive wie Stabilisatoren, Gleit- und Entformungsmittel, Füllstoffe, Nukleierungsmittel, Antistatika, Weichmacher, Farbstoffe, Pigmente oder Flammschutzmittel, die vor der Anwendung in üblichen Mengen zugesetzt werden. In der Regel werden diese bei der Granulierung des pulverförmig anfallenden Polymerisationsprodukts in das Polymerisat eingearbeitet.

Übliche Stabilisatoren sind Antioxidantien wie sterisch gehinderte Phenole, Verarbeitungsstabilisatoren wie Phosphite oder

Phosphonite, Säurefänger wie Calcium- oder Zinkstearat oder Dihydrotalcit, sterisch gehinderte Amine oder auch UV-Stabilisatoren.

Im allgemeinen enthalten die erfindungsgemäßen Polymerisate einen oder mehrere der Stabilisatoren in Mengen bis zu 2 Gew. -%.

Geeignete Gleit- und Entformungsmittel sind beispielsweise Fettsäuren, Calcium- oder Zinksalze der Fettsäuren, Fettsäureamide oder niedermolekulare Polyolefinwachse, die üblicherweise in Konzentrationen bis 2 Gew-% eingesetzt werden.

Als Füllstoffe für die statistischen Propylencopolymerisate kommen z.B. Talkum, Kreide oder Glasfasern in Betracht, wobei hier Mengen bis 50 Gew.-% verwendet werden können.

Geeignete Nukleierungsmittel sind beispielsweise anorganische Zusatzstoffe wie Talkum, Kieselsäure oder Kaolin, Salze von Mono- oder Polycarbonsäuren wie Natriumbenzoat oder Aluminium-tert.-butylbenzoat, Dibenzylidensorbitol oder dessen $C_1$-$C_8$-alkylsubstituierte Derivate wie Methyl- oder Dimethyldibenzylidensorbitol oder Salze von

Diestern der Phosphorsäure wie Natrium-2,2'-methylenbis (4,6,-di-tert.-butylphenyl)phosphat. Der Gehalt der statistischen Propylencopolymerisate an Nukleierungsmitteln beträgt in der Regel bis 5 Gew.-%.

Solche Additive sind in der Regel handelsüblich und werden beispielsweise in Gächter/Müller, Plastics Additives Handbook, 4th Edition, Hansa Publishers, Munich, 1993 beschrieben.

Die statistischen Copolymerisate des Propylens mit anderen Alk-1-enen mit bis zu 10 C-Atomen zeichnen sich gegenüber den bisher bekannten statistischen Propylencopolymerisaten insbesondere durch gute Steifigkeit, Zähigkeit und Transparenz sowie eine bessere Verarbeitbarkeit zu biaxial gereckten Polypropylen-Folien aus. Aufgrund dieser guten anwendungstechnischen Eigenschaften eignen sich die erfindungsgemäßen statistischen Propylencopolymerisate vor allem zur Herstellung von Folien, Fasern oder Formkörpern.

Gegenstand der Erfindung sind aus den statistischen Copolymerisaten des Propylens mit anderen Alk-1-enen mit bis zu 10 C-Atomen hergestellte biaxial gereckte Folien mit einem Reckverhältnis von mindestens 4:1 in der Längsrichtung und von mindesten 5:1 in der Querrichtung.

Die Herstellung der biaxial gereckte Folien kann durch Schmelzeextrusion des Propylencopolymerisats durch eine Düse erfolgen, wobei die erhaltene Folie dann auf eine Temperatur von 100 bis 20˚C abgekühlt wird um sie zu verfestigen und die verfestigte Folie in der Längsrichtung bei einer Temperatur von 80 bis 150˚C mit einem Reckverhältnis von mindestens 4:1 und in der Querrichtung bei einer Temperatur von 120 bis 170˚C mit einem Reckverhältnis von mindestens 5:1 gereckt wird.

Hierzu schmilzt man das Propylencopolymerisat bei Temperaturen von beispielsweise 220 bis 300˚C, bevorzugt von 240 bis 280˚C, in einem Extruder auf, wobei im Extruder weitere Additive oder Polymerisate zugegeben werden können, und extrudiert die Schmelze durch eine Flachdüse oder eine ringförmige Düse.

Zur Verfestigung wird die erhaltene Folie dann abgekühlt. Bei einer Extrusion durch eine Flachdüse (Breitschlitzdüse) erfolgt die Kühlung in der Regel durch eine oder mehrere Abzugswalzen, die eine Oberflächentemperatur von beispielsweise 10 bis 100˚C, vorzugsweise 20 bis 70˚C, haben. Bei Einsatz einer ringförmigen Düse wird zum Kühlen des Folienschlauchs meist Luft oder Wasser mit einer Temperatur von 0 bis 40˚C eingesetzt.

Die erhaltene Folie wird anschließen längs und quer zur Extrusionsrichtung gereckt, was zu einer Orientierung der Molekülketten führt. Mit dem Recken kann in Längsrichtung oder in Querrichtung begonnen werden oder es kann simultan erfolgen. Bei der Breitschlitzextrusion wird in der Regel zunächst die Längsreckung mit Hilfe von mehreren, entsprechend dem angestrebten Reckverhältnis unterschiedlich schnell laufenden Walzenpaaren durchgeführt. Anschließend erfolgt die Querreckung mittels eines entsprechenden Kluppenrahmens. Beim Einsatz einer ringförmigen Düse erfolgt das Recken in der Regel simultan in beide Richtungen durch Einblasen von Gas in den Folienschlauch.

Vor dem Recken ist es möglich, die Folie auf eine Temperatur von beispielsweise 60 bis 110˚C vorzuheizen. Vorzugsweise erfolgt die Längsreckung bei einer Temperatur von 80 bis 150˚C, insbesondere 110 bis 140˚C, und die Querreckung bei einer Temperatur von 120 bis 170˚C, insbesondere 155 bis 165˚C. Das Längsreckverhältnis beträgt in der Regel mindestens 4:1, vorzugsweise von 4,5:1 bis 9,0:1 und insbesondere von 5,5:1 bis 8,5:1. Das Querreckverhältnis beträgt in der Regel mindestens 5:1, vorzugsweise von 5:1 bis 12:1 und insbesondere von 5,5:1 bis 10:1.

An die biaxiale Reckung kann sich eine Wämebehandlung zur Thermofixierung anschließen, bei der die Folie etwa 0,1 bis 10 s bei einer Temperatur von 100 bis 160˚C gehalten wird. Anschließend wird die Folie in üblicher Weise von einer Aufwickeleinrichtung aufgewickelt.

Während oder nach der Herstellung der BOPP-Folie können eine oder beide Oberflächen nach einer der bekannten Methoden corona- oder flammbehandelt werden oder es kann ein Metall wie Aluminium aufgedampft werden.

Es ist auch möglich, daß die statistischen Propylencopolymerisate nur eine oder nur einige Schichten einer mehrschichtig aufgebauten biaxial gereckten Folien bilden.

Die aus den statistischen Copolymerisaten des Propylens mit anderen Alk-1-enen mit bis zu 10 C-Atomen nach dem ebenfalls erfindungsgemäßen Verfahren hergestellten biaxial gereckten Folien sind insbesondere hervorragend in der Steifigkeit, der Transparenz und den Barriereeigenschaften.

Beispiele

Es wurden statistischen Copolymerisate des Propylens mit Ethylen oder But-1-en hergestellt und auf ihre Eignung zur Herstellung von biaxial gereckten Folien untersucht bzw. aus ihnen biaxial gereckten Folien hergestellt.

Die Polymerisation der statistischen Propylencopolymerisate erfolgte jeweils in einem kontinuierlich betriebenen, vertikal gerührten Gasphasenreaktor mit einem Nutzvolumen von 800 l bei einer Temperatur von 80˚C und unter einem Druck von 28 bar, wobei der Reaktor ein gerührtes Festbett aus feinteiligem Polymerisat enthielt. Es wurde jeweils eine stationäre Konzentration der eingesetzten Monomere im Gasraum eingestellt. Hierzu wurde in Abständen von fünf Minuten die Gaszusammensetzung mittels eines Gaschromatographen bestimmt und durch Nachführen der benötigten Monomermengen geregelt. Der Reaktorausstoß wurde über die Menge der zudosierten titanhaltigen Feststoffkomponente a) auf 150 kg/h, d.h. eine Raum/Zeit-Ausbeute von 187,5 kg/$m^3$h, eingestellt. Dies entspricht einer mittleren Verweilzeit des Polymerisats von 1,5 h.

Als Katalysatorkomponente b) wurde während der Polymerisation Triethylaluminium in einer Menge von jeweils 210 mmol/g titanhaltiger Feststoffkomponente a) kontinuierlich zugegeben. Ebenfalls kontinuierlich wurde als weitere Elektronendonorverbindung c) Dicyclopentyldimethoxysilan in einer Menge von 0,1 mol pro Mol Triethylaluminium zugeführt.

Zur Charakterisierung der Proben wurden folgende Prüfungen durchgeführt:

Bestimmung des mittleren Teilchendurchmessers :

Zur Bestimmung des mittleren Teilchendurchmessers des Kieselgels wurde durch Coulter-Counter-Analyse nach ASTM Standard D 4438 die Korngrößenverteilung der Kieselgelpartikel ermittelt und daraus der volumenbezogene Mittelwert (Medianwert) berechnet.

Bestimmung des Porenvolumens:

Durch Quecksilber-Porosimetrie nach DIN 66133

Bestimmung der spezifischen Oberfläche:

Durch Stickstoff-Adsorption nach DIN 66131

Bestimmung des Wassergehalts:

Zur Bestimmung des Wassergehalts wurden 5 g Kieselgel bei 160˚C unter Normaldruck 15 min getrocknet (Gewichtskonstanz). Die Gewichtsabnahme entspricht dem ursprünglichen Wassergehalt.

Bestimmung der mittleren Teilchengröße der Primärpartikel, des mittleren Durchmessers der Hohlräume bzw. Kanäle und des makroskopischen Volumenanteils der Hohlräume und Kanäle:

Die Bestimmung der mittleren Teilchengröße der Primärpartikel, des mittleren Durchmessers der Hohlräume bzw. Kanäle sowie des makroskopischen Volumenanteils der Hohlräume und Kanäle der verwendeten Kieselgele geschah mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Kieselgels. Die erhaltenen elektronenmikroskopischen Aufnahmen wurden in ein Grauwert-Binärbild überführt und mittels des Software-Pakets Analysis der Fa. SIS digital ausgewertet.

Bestimmung der Produktivität:

Die Produktivität ist die Menge an Polymerisat in Gramm, die pro Gramm eingesetzter titanhaltiger Feststoffkomponente a) erhalten wurde.

Bestimmung des Ethylen- und des But-1-en-Gehalts:

Der Ethylen- und der But-1-en-Gehalt wurden durch $^{13}$C-NMR-Spektroskopie an Polymergranulat bestimmt.

Bestimmung des Chlorgehalts:

Der Chlorgehalt der Polymerisate wurde durch mikrocoulometrische Bestimmung nach DIN 51408 Teil 2 ermittelt.

Bestimmung des xylollöslichen Anteils:

nach ISO-Norm 1873-1:1991.

Zur Ermittlung der xylollöslichen Anteile wurden 5 g Propylenpolymerisat in 500 ml destilliertes Xylol (Isomerengemisch), das zuvor auf 100˚C erhitzt worden war, gegeben. Anschließend wurde die Mischung auf den Siedepunkt des Xylols erhitzt und 60 min bei dieser Temperatur gehalten. Daraufhin wurde innerhalb von 20 min mit einem Kältebad auf 5˚C abgekühlt und dann wieder auf 20˚C erwärmt. Diese Temperatur wurde für 30 min gehalten. Das ausgefallene Polymerisat wurde abfiltriert. Von dem Filtrat wurden exakt 100 ml abgefüllt und das Lösungsmittel am Rotationsverdampfer entfernt. Der verbleibende Rückstand wurde für 2 h bei 80˚C/250 mbar getrocknet und nach dem Erkalten ausgewogen.

Der xylollösliche Anteil wurde dann nach der Formel

$$X_L = \frac{g \times 500 \times 100}{G \times V}$$

mit

$X_L$ = xylollöslicher Anteil in %,
g = gefundene Menge in g,
G = Produkteinwaage in g und
V = Volumen der eingesetzten Filtratmenge in ml

berechnet.

Bestimmung der mm-Triaden:

Durch $^{13}C$-NMR-Spektroskopie an Polymergranulat

Bestimmung des Schmelze-Fließrate (MFR):

nach ISO-Norm 1133, bei 230°C und unter einem Gewicht von 2,16 kg.

Bestimmung von $T_{m2}$ :

Die Schmelztemperatur $T_{m2}$ wurde durch DSC-Messung nach ISO-Norm 3146 mit einem ersten Aufheizen mit einer Aufheizrate von 20°C pro Minute bis 200°C, einer dynamische Kristallisation mit einer Kühlrate von 20°C pro Minute bis 25°C und einem zweiten Aufheizen mit einer Aufheizrate von 20°C pro Minute wiederum bis 200°C ermittelt.

Bestimmung des G-Moduls:

Nach ISO 6721-2, bei 23°C Meßtemperatur.

Bestimmung von $T_m$:

Mit einem Dehnrheometer der Fa. Rheometric Scientific wurde bei verschiedenen Temperaturen die Dehnviskosität des zu messenden Propylenpolymerisats bestimmt. Hierzu wurde das Polymerisat zunächst durch eine Düse extrudiert, dann zu einem flachen Streifen von 2 mm Dicke gepreßt und langsam auf Raumtemperatur abgekühlt. Aus dem Streifen wurde eine rechteckige Probe von 2 x 8 x 56 $mm^3$ geschnitten. Diese wurde in das auf die Meßtemperatur erwärmte Dehnrheometer eingelegt, zehn Minuten bei dieser Temperatur gehalten und dann mit einer konstanten Hencky-Dehnrate $\dot{\varepsilon}$ von 0,2 $s^{-1}$ gestreckt. Durch Begutachten des Kurvenverlaufs in einem Diagramm der logarithmisch aufgetragenen Dehnviskosität $\mu(T)$ 2 Sekunden nach Dehnbeginn bei einer konstanten Hencky-Dehnrate $\dot{\varepsilon}$ von 0,2 $s^{-1}$ gegen die Meßtemperatur T wurde die niedrigste Temperatur $T_m$ ermittelt, bei der das Propylenpolymerisat vollständig aufgeschmolzen ist. Diese rheologische Schmelztemperatur $T_m$ ist die Temperatur, bei der die Dehnviskosität um weniger als 7,5 % höher liegt als bei T + 1K und um 7,5 % oder mehr tiefer liegt als bei T - 1K.

Bestimmung des $Q_5$-Wertes:

Es wurden die Werte für $\mu(T_m)$ und $\mu(T_m\text{-}5K)$ ermittelt und nach der Formel

$$Q_5 = 1000 \times \frac{\mu(T_m)}{\mu(T_m - 5K)}$$

in Beziehung gesetzt.

Der Wert $\mu(T_m)$ entspricht der Dehnviskosität, die die Schmelze zwei Sekunden nach Dehnbeginn mit einer konstanten Hencky-Dehnrate $\dot{\varepsilon}$ von 0,2 $s^{-1}$ bei der Temperatur $T_m$ aufweist.

Der Wert $\mu(T_m\text{-}5K)$ entspricht der Dehnviskosität, die die Schmelze zwei Sekunden nach Dehnbeginn mit einer konstanten Hencky-Dehnrate $\dot{\varepsilon}$ von 0,2 $s^{-1}$ bei der Temperatur $T_m$-5K aufweist.

Bestimmung des $Q_3$-Wertes:

Es wurden die Werte für $\mu(T_m)$ und $\mu(T_m\text{-}3K)$ ermittelt und nach der Formel

$$Q_3 = 1000 \times \frac{\mu(T_m)}{\mu(T_m-3K)}$$

in Beziehung gesetzt.

Der Wert $\mu(T_m\text{-}3K)$ entspricht der Dehnviskosität, die die Schmelze zwei Sekunden nach Dehnbeginn mit einer konstanten Hencky-Dehnrate $\dot{\varepsilon}$ von 0,2 $s^{-1}$ bei der Temperatur $T_m$-3K aufweist.

Bestimmung von SH:

Es wurden auf graphischem Weg aus im doppeltlogarithmischen Maßstab aufgetragenen Diagrammen der Dehnviskosität gegen die Zeit die maximale Steigung der Dehnviskosität bei Temperaturen kleiner $T_m$-5K und die Steigung 1 Sekunde nach Dehnbeginn bei einer konstanten Hencky-Dehnrate $\dot{\varepsilon}$ von 0,2 $s^{-1}$ und einer Temperatur von $T_m$-5K bestimmt. Aus diesen Größen wurde nach der Formel

$$SH = \frac{\max(m(\mu(T \leq T_m-5K)))}{m(\mu(T=T_m-5K,\ t=1s))}$$

der Faktor SH ermittelt.

Bestimmung von PI:

Die Größe PI wurde nach der Formel

$$PI = \ln(SH + 1) \cdot (\ln Q_3 + \ln Q_5)$$

aus den Werten für $Q_3$, $Q_5$ und SH berechnet.

Bestimmung des Verarbeitungsfensters:

Während der Herstellung der BOPP-Folien wurde durch Variation der Recktemperatur der Temperaturbereich festgestellt, innerhalb dem es möglich ist, BOPP-Folien zu erhalten. Dieser Temperaturbereich ist dadurch begrenzt, daß bei höheren Temperaturen der Film reißt und bei niedrigeren Temperaturen die Kluppen nicht mehr greifen.

Bestimmung von 20:

Mit einem Foliendickenmeßgerät wurde quer zur Extrusionsrichtung das Foliendickenprofil der erhaltenen BOPP-Folien bestimmt. Der Wert $2\sigma$ gibt die doppelte Standardabweichung vom Mittelwert wieder und ist ein Maß für die Gleichmäßigkeit der Foliendicke.

Bestimmung des Elastizitätsmoduls (Zug-E-Modul) und der Bruchdehnung (= Dehnbarkeit):

Aus biaxial gereckten Folien wurden in Längs- und in Querrichtung Streifen mit 15 mm Breite geschnitten, an

denen nach ISO-Norm 527-2 bei 23°C Meßtemperatur der Zug-E-Modul und die Bruchdehnung bestimmt wurde.

Die Bestimmung der Trübung (Haze):

Nach ASTM D-1003.

Die Bestimmung des Glanzes:

Nach ISO/IEC 2813.

Bestimmung des Schrumpfs:

nach ISO 2577 (120°C/5 min)

Beispiel 1

i) Herstellung der titanhaltigen Feststoffkomponente $a_1$)

In einer ersten Stufe wurde ein durch Sprühtrocknung hergestelltes, feinteiliges, sphärisches Kieselgel, das einen mittleren Teilchendurchmesser von 45 μm, ein Porenvolumen von 1,5 $cm^3/g$, eine spezifische Oberfläche von 260 $m^2/g$ und einen Wassergehalt von 2,7 Gew.-% aufwies, mit einer Lösung von n-Butyloctylmagnesium in n-Heptan versetzt, wobei pro Mol $SiO_2$ 0,3 mol der Magnesiumverbindung eingesetzt wurden. Das feinteilige Kieselgel war zusätzlich durch eine mittlere Teilchengröße der Primärpartikel von 3-5 μm und durch Hohlräume und Kanäle mit einem Durchmesser von 3-5 μm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol. -%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente $a_1$) enthielt

3,5 Gew.-% Ti
7,4 Gew.-% Mg
28,2 Gew.-% Cl.

ii) Polymerisation

Die Polymerisation erfolgte mit dem oben beschriebenen titanhaltigen Feststoff $a_1$) und einem Gasgemisch, das neben Propylen 2,7 Vol.-% Wasserstoff und 0,9 Vol.-% Ethylen enthielt. Die Polymerisationsbedingen sind in der nachfolgenden Tabelle 1 und die gemessenen Produkteigenschaften in der Tabelle 2 zusammengestellt. Die nachstehende Figur 1 zeigt für dieses Polymerisat den Verlauf der Dehnviskosität $\mu$ bei einer konstanten Hencky-Dehnrate $\dot{\varepsilon}$ von 0,2 $s^{-1}$ bei den Temperaturen 151°C und 166°C. Bei 166°C ist das Polymerisat vollständig aufgeschmolzen, bei 151°C zeigt sich eine kristallisationsinduzierte Dehnverfestigung. Die nachstehende Figur 2 gibt für dieses Polymerisat den Verlauf der Dehnviskosität $\mu(T)$ 2 Sekunden nach Dehnbeginn bei einer konstanten Hencky-Dehnrate $\dot{\varepsilon}$ von 0,2 $s^{-1}$ als Funktion der Temperatur wieder.

iii) Herstellung einer biaxial gereckten Folie

Aus dem erhaltenen statistischen Propylen-Ethylen-Copolymerisat wurde eine biaxial gereckten Folie mit ca. 20 μm Dicke hergestellt. Die Herstellung erfolgte mit einer Pilotanlage der Fa. Brückner Maschinenbau mit einer 1,3 m-Breitschlitzdüse. Es wurde mit einem Durchsatz von 112 kg/h gearbeitet. Die extrudierte Folie wurde auf eine Temperatur von 40°C abgekühlt und die verfestigte Folie in der Längsrichtung bei einer Temperatur von 125°C und einem Reckverhältnis von 5,1:1 und in der Querrichtung bei einer Temperatur von 156°C und einem Reckverhältnis von 8,8:1 gereckt wird. Die Eigenschaften der hergestellten biaxial gereckten Folie können der nachfolgenden Tabelle 3 entnommen

werden.

Beispiel 2

Mit dem oben beschriebenen titanhaltigen Feststoff $a_1$) wurde ein statistisches Propylen-But-1-en-Copolymerisat hergestellt und wie in Beispiel 1 zu einer biaxial gereckten Folie mit ca. 20 μm Dicke verarbeitet. Die Polymerisationsbedingungen und die gemessenen Polymer- und Folieneigenschaften sind ebenfalls in den Tabellen 1 bis 3 aufgeführt.

Beispiele 3 und 4

Die Polymerisation der Propylencopolymerisate erfolgte jeweils mit dem oben beschriebenen titanhaltigen Feststoff $a_1$). Die Polymerisationsbedingungen und die gemessenen Polymereigenschaften sind in den Tabellen 1 und 2 wiedergeben.

Vergleichsbeispiel A

Analog Beispiel 1 wurde mit dem oben beschriebenen titanhaltigen Feststoff $a_1$) ein statistisches Propylen-Ethylen-Copolymerisat hergestellt und zu einer biaxial gereckten Folie mit ca. 20 μm Dicke verarbeitet. Die Polymerisationsbedingungen und die gemessenen Polymer- und Folieneigenschaften sind in den Tabellen 1 bis 3 aufgeführt.

Vergleichsbeispiele B und C

Die Polymerisation der Propylencopolymerisate erfolgte jeweils mit dem oben beschriebenen titanhaltigen Feststoff $a_1$). Die Polymerisationsbedingungen und die gemessenen Polymereigenschaften sind in den Tabellen 1 und 2 wiedergeben.

Vergleichsbeispiel D

Es wurde eine Homopolymerisation von Propylen mit dem oben beschriebenen titanhaltigen Feststoff $a_1$) unter den in der nachstehenden Tabelle 1 angegebenen Bedingungen durchgeführt. Die Polymereigenschaften sind in der Tabelle 2 aufgeführt.

Vergleichsbeispiel E

Mit einem Propylenhomopolymerisat, das kommerziell zur OPP-Folienherstellung eingesetzt wird (Novolen® 1104 K der BASF Aktiengesellschaft), wurde wie in Beispiel 1 eine biaxial gereckte Folie mit ca. 20 μm Dicke hergestellt. Die Eigenschaften des für die Folienherstellung verwendeten Polymerisats sind ebenfalls in Tabelle 2 zusammengestellt. Die Folieneigenschaften können der nachfolgenden Tabelle 3 entnommen werden.

Tabelle 1

| | Beispiel 1 | Beispiel 2 | Beispiel 3 | Beispiel 4 | Vergl. beisp. A | Vergl. beisp. B | Vergl. beisp. C | Vergl. beisp. D |
|---|---|---|---|---|---|---|---|---|
| Druck [bar] | 32 | 32 | 28 | 32 | 32 | 32 | 28 | 32 |
| Temperatur [°C] | 80 | 80 | 80 | 80 | 80 | 80 | 80 | 80 |
| Molverhältnis Aluminiumverbindung b)/Elektronendonor c) | 10:1 | 10:1 | 10:1 | 10:1 | 10:1 | 10:1 | 10:1 | |
| Wasserstoff [Vol.-%] | 0,81 | 0,76 | 0,72 | 0,76 | 0,59 | 0,56 | 0,74 | 1,0 |
| Ethylen [Vol.-%] | 0,5 | - | - | 0,7 | 0,13 | 0,3 | - | - |
| But-1-en [Vol.-%] | - | 2,23 | 5,14 | - | - | - | 1,1 | - |

(fortgesetzt)

| | Beispiel 1 | Beispiel 2 | Beispiel 3 | Beispiel 4 | Vergl. beisp. A | Vergl. beisp. B | Vergl. beisp. C | Vergl. beisp. D |
|---|---|---|---|---|---|---|---|---|
| Verhältnis des Partialdrucks von Propylen zu dem der Comonomere | 200:1 | 44:1 | 18:1 | 140:1 | 760:1 | 330:1 | 90:1 | - |
| Produktivität [g Polymerisat/g titanhaltige Feststoffkomponente a)] | 27200 | 22000 | 18300 | 21800 | 22600 | 21800 | 20500 | 12200 |

Tabelle 2

| | Beispiel 1 | Beispiel 2 | Beispiel 3 | Beispiel 4 | Vergl. beisp. A | Vergl. beisp. B | Vergl. beisp. C | Vergl. beisp. D | Vergl. beisp. E |
|---|---|---|---|---|---|---|---|---|---|
| Ethylen in Polymerisat [Gew.-%] | 1,1 | - | - | 1,1 | 0,1 | 0,5 | - | - | - |
| But-1-en in Polymerisat [Gew.-%] | - | 0,9 | 2,9 | - | - | - | 0,4 | - | - |
| Chlorgehalt [ppm] | 11,0 | 13,6 | 17,3 | 14,5 | 14,0 | 14,5 | 15,4 | 24,3 | |
| $X_L$ [Gew.-%] | 1,7 | 0,9 | 1,7 | 2,3 | 1,7 | 1,9 | 1,65 | 1,5 | 3,2 |
| mm-Triaden [%] | 98,7 | | | | | 98,7 | | | |
| MFR [g/10 min] | 2,9 | 2,6 | 3,2 | 3,0 | 3,0 | 3,1 | 2,9 | 4,9 | 3,2 |
| $T_{m2}$ [˚C] | 155,7 | 161,3 | 155,3 | 156,3 | 164,7 | 160,7 | 162,9 | | 165,5 |
| G-Modul [MPa] | 762 | 755 | 711 | 700 | 777 | 782 | 814 | 936 | 742 |
| $T_m$ [˚C] | 165 | 173 | 165 | 166 | 174 | 170 | 172 | 173 | 173 |
| $Q_5$ | 532 | 563 | 220 | 224 | 227 | 277 | 150 | 40 | 170 |
| $Q_3$ | 760 | 734 | 673 | 686 | 673 | 800 | 513 | 450 | 480 |
| SH | 4,0 | 4,2 | 4,3 | 4,7 | 1,7 | 2,0 | 2,5 | 2,8 | 3,9 |
| PI | 21 | 22 | 20 | 21 | 12 | 14 | 14 | 15 | 18 |

Tabelle 3

| | Beispiel 1 | Beispiel 2 | Vergl. beisp. B | Vergl. beisp. E |
|---|---|---|---|---|
| Verarbeitungsfenster [˚C] | 12 | 12 | 3 | 9 |
| $2\sigma$[$\mu$m] | 0,4 4 | 0,8 | 1,1 | 0.9 |
| E-Modul in Längsrichtung [MPa] | 1518 | 1476 | 1458 | 1289 |
| E-Modul in Querrichtung [MPa] | 2767 | 2932 | 2976 | 3199 |

(fortgesetzt)

| | Beispiel 1 | Beispiel 2 | Vergl. beisp. B | Vergl. beisp. E |
|---|---|---|---|---|
| Bruchdehnung in Längsrichtung [%] | 194 | 182 | 178 | 173 |
| Bruchdehnung in Querrichtung [%] | 59 | 56 | 54 | 48 |
| Haze [%] | 0,1 | 0,1 | 0,1 | 0,1 |
| Glanz [Skalenteile] | 129 | 126 | 127 | 119 |
| Schrumpf längs [%] | 4,0 | 3,0 | 3,0 | 3,0 |
| Schrumpf quer [%] | 5,3 | 3,0 | 3,5 | 3,0 |

Aus Tabelle 2 wird ersichtlich, daß insbesondere die Polymerisate der erfindungsgemäßen Beispiele 1 bis 4 PI-Werte größer 18 und $Q_5$-Werte größer 200 aufweisen.

Der Vergleich zwischen Beispiel 1 und den Vergleichsbeispielen A und B macht deutlich, daß die Absenkung des Ethylengehalts bei praktisch gleichen xylollöslichen Anteilen zwar zu statistischen Copolymerisaten des Propylens führt, die eine höhere Steifigkeit (d.h. einen höheren G-Modul) aufweisen und deren Schmelzpunkt $T_{m2}$ höher liegt, die aber deutlich niedrigere PI- und $Q_5$-Werte besitzen. Durch die Absenkung des Ethylengehalts wird die Isotaktizität der Copolymerisate, gemessen über den mm-Triaden-Anteil, nicht verändert. Auch der Vergleich zwischen Beispiel 2 und Vergleichsbeispiel C zeigt, daß die Absenkung des Comonomergehalts zu einer Verschlechterung der PI- und $Q_5$-Werte führt.

Aus den Vergleichsbeispielen D und E geht hervor, daß eine Anhebung der xylollöslichen Anteile zwar zu höheren PI- und $Q_5$-Werten führt, das Niveau der erfindungsgemäßen Beispiele 1 bis 4 jedoch nicht erreicht wird.

Tabelle 3 belegt, daß Propylenpolymerisate mit hohen PI- und $Q_5$-Werten eine bessere Verarbeitbarkeit zu biaxial gereckten Folien aufweisen. Die erfindungsgemäßen Beispiele 1 und 2 zeigen ein deutlich größeres Verarbeitungsfenster als die Vergleichsbeispiele B und E und auch die Gleichmäßigkeit der Foliendicke (niedriger Wert für 2σ) ist größer.

**Patentansprüche**

**1.** Verfahren zur Herstellung von biaxial gereckten Polypropylencopolymerisat-Folien, bei dem man aus statistischen Copolymerisaten des Propylens mit anderen Alk-1-enen mit bis zu 10 C-Atomen,
deren Gehalt an Comonomeren im Bereich von 0,7 bis 1,4 Gew. -% liegt, falls in den Propylencopolymerisaten als Comonomer nur Ethylen enthalten ist, oder
deren Gehalt an Comonomeren im Bereich von 0,7 bis 3,0 Gew. -% liegt, falls als Comonomer mindestens ein $C_4$-$C_{10}$-Alk-1-en enthalten ist, und
deren in kaltem Xylol löslicher Anteil von 1,0 bis 2,5 Gew. -% beträgt, falls in den Propylencopolymerisaten als Comonomer Ethylen enthalten ist, oder
deren in kaltem Xylol löslicher Anteil von 0,75 bis 2,0 Gew.-% beträgt, falls als Comonomere nur $C_4$-$C_{10}$-Alk-1-ene enthalten sind,
eine Folie herstellt und diese in der Längsrichtung mit einem Reckverhältnis von mindestens 4:1 und in der Querrichtung mit einem Reckverhältnis von mindestens 5:1 reckt,
wobei die statistischen Copolymerisate erhältlich sind durch Polymerisation von Propylen mit anderen Alk-1-enen mit bis zu 10 C-Atomen aus der Gasphase heraus bei einer Temperatur von 50 bis 100°C und einem Druck von 15 bis 40 bar in Gegenwart eines Ziegler-Natta-Katalysatorsystems, enthaltend

a) eine titanhaltige Feststoffkomponente, enthaltend mindestens eine halogenhaltige Magnesiumverbindung und einen Elektronendonor sowie ein anorganisches Oxid als Träger,
b) eine Aluminiumverbindung und
c) mindestens eine weitere Elektronendonorverbindung,

wobei das Verhältnis der Partialdrücke von Propylen zu denen der Comonomere von 400:1 bis 15:1 und das Molverhältnis zwischen der Aluminiumverbindung b) und der weiteren Elektronendonorverbindung c) von 20:1 bis 2:1 beträgt.

2. Verfahren nach Anspruch 1, wobei als Comonomer ausschließlich Ethylen verwendet wird.

3. Verfahren nach Anspruch 1, wobei als Comonomer But-1-en verwendet wird.

## Claims

1. A method for producing biaxially oriented polypropylene copolymer films, wherein a film is produced from random propylene copolymers with other alk-1-enes having up to 10 C atoms, wherein
the comonomer content thereof is in the range from 0.7 to 1.4 wt.% if ethylene is the only comonomer present in the propylene copolymers, or
the comonomer content thereof is in the range from 0.7 to 3.0 wt.% if at least one $C_4$-$C_{10}$ alk-1-ene is present as comonomer, and
the soluble fraction in cold xylol thereof amounts to 1.0 to 2.5 wt.% if ethylene is present as comonomer in the propylene copolymers, or
the soluble fraction in cold xylol thereof amounts to 0.75 to 2.0 wt.% if only $C_4$-$C_{10}$ alk-1-enes are present as comonomers,
and said film is drawn in the longitudinal direction with a draw ratio of at least 4:1 and in the transverse direction with a draw ratio of at least 5:1,
the random copolymers being obtainable by gas phase polymerisation of propylene with other alk-1-enes having up to 10 C atoms at a temperature of 50 to 100˚C and a pressure of 15 to 40 bar in the presence of a Ziegler-Natta catalyst system containing

   a) a titanium-containing solid component containing at least one halogen-containing magnesium compound and an election donor as well as an inorganic oxide as support,
   b) an aluminium compound and
   c) at least one further electron donor compound,

   the ratio of partial pressures of propylene to those of the comonomers being from 400:1 to 15:1 and the molar ratio between the aluminium compound b) and the further electron donor compound c) being from 20:1 to 2:1.

2. The method according to claim 1, wherein exclusively ethylene is used as comonomer.

3. The method according to claim 1, wherein but-1-ene is used as comonomer.

## Revendications

1. Procédé de production de pellicules bi-orientées en copolymère de polypropylène, où on produit une pellicule à partir de copolymères statistiques du propylène comportant d'autres 1-alcènes avec jusqu'à 10 atomes de C,
dont la teneur en comonomères se situe dans une gamme de 0, 7 à 1,4 % en poids, si les copolymères de propylène ne contiennent que de l'éthylène en tant que comonomère, ou
dont la teneur en comonomères se situe dans une gamme de 0,7 à 3,0 % en poids, si au moins un 1-alcène en $C_4$-$C_{10}$ est contenu en tant que comonomère, et
dont la fraction soluble dans le xylène froid se situe de 1,0 à 2,5 % en poids, si les copolymères de propylène contiennent de l'éthylène en tant que comonomère, ou
dont la fraction soluble dans le xylène froid se situe de 0,75 à 2,0 % en poids, si le seul comonomère contenu est de un 1-alcène en $C_4$-$C_{10}$,
la pellicule étant étirée dans le sens longitudinal selon un taux d'étirage d'au moins 4:1 et dans le sens transversal selon un taux d'étirage d'au moins 5:1,
où les copolymères statistiques sont obtenus par polymérisation en phase gazeuse de propylènes avec d'autres 1-alcènes ayant jusqu'à 10 atomes de C, à des températures de 50 à 100 ˚C, et sous des pressions de 15 à 40 bars, en présence d'un système catalyseur Ziegler-Natta contenant

   a) un composé solide au titane, contenant au moins un composé au magnésium halogéné et un composé électro-doneur, ainsi que un oxyde inorganique en tant que support,
   b) un composé d'aluminium et
   c) au moins un composé électro-doneur supplémentaire,

où le rapport entre les pressions partielles du propylène et des comonomères est situé de 400:1 à 15:1 et le rapport molaire entre le composé d'aluminium b) et le composé nucléophile c) supplémentaire se situe entre 20:1 et 2:1.

**2.** Procédé selon la revendication 1, où exclusivement l'éthylène est utilisé comme comonomère.

**3.** Procédé selon la revendication 1, où le 1-butène est utilisé comme comonomère.

FIG.1

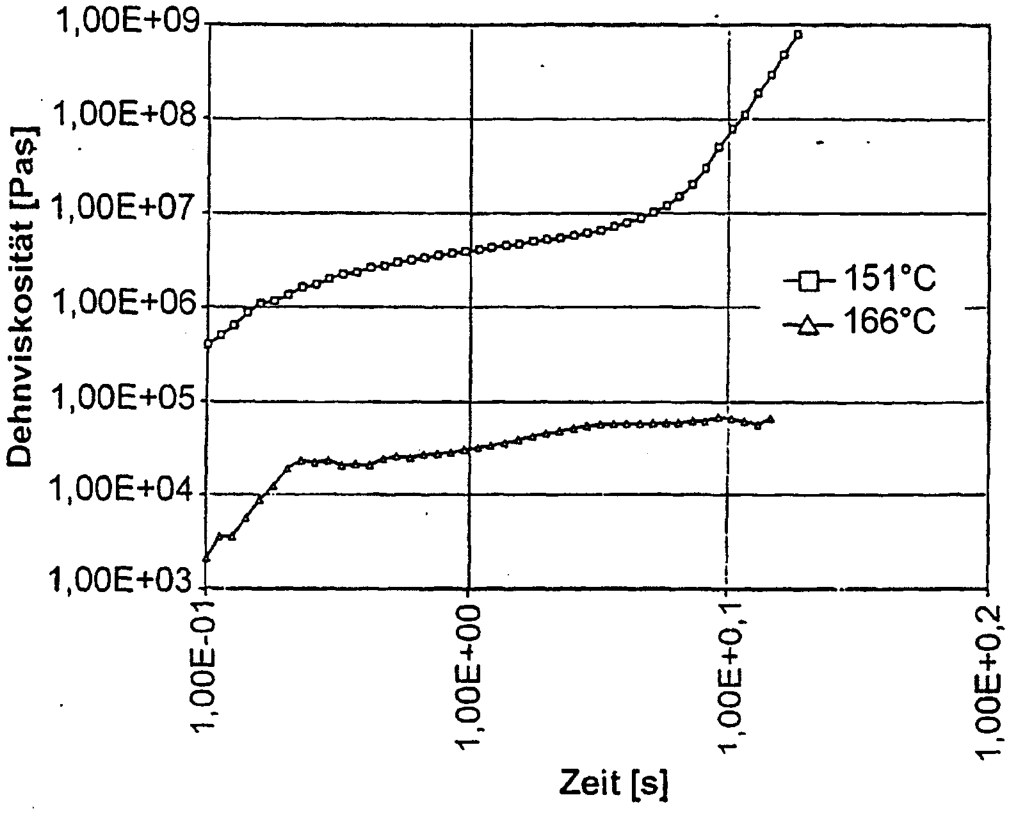
1,00E+09
1,00E+08
1,00E+07
1,00E+06
1,00E+05
1,00E+04
1,00E+03
Dehnviskosität [Pas]
151°C
166°C
1,00E-01
1,00E+00
1,00E+0,1
1,00E+0,2
Zeit [s]

FIG.2

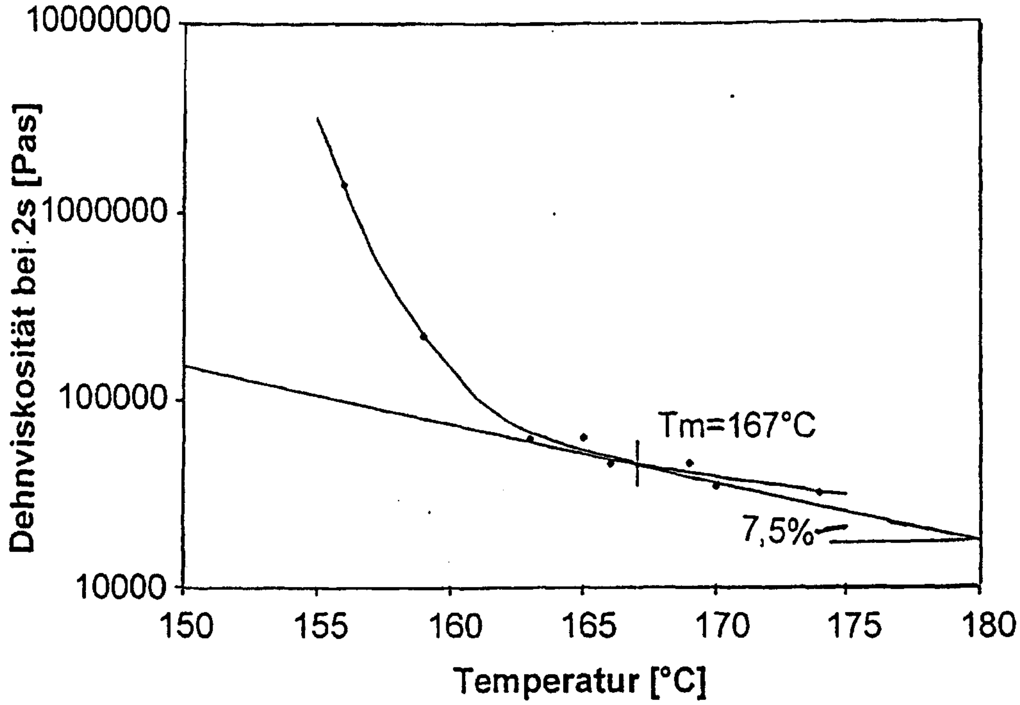
10000000
1000000
100000
10000
Dehnviskosität bei 2s [Pas]
Tm=167°C
7,5%
150
155
160
165
170
175
180
Temperatur [°C]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 778295 A
- EP 339804 A
- US 4355144 A
- EP 115940 A
- EP 45975 A
- EP 45977 A
- EP 86473 A
- EP 171200 A
- GB 2111066 A
- US 4857613 A
- US 5288824 A